# EUROPÄISCHE PATENTSCHRIFT

(11) **EP 0 481 174 B1**
(45) Veröffentlichungstag und Bekanntmachung des Hinweises auf die Patenterteilung: **19.07.1995**
(21) Anmeldenummer: 91111800.8
(22) Anmeldetag: 16.07.1991
(51) Int. Cl.: C08J 11/00

(54) **Recycling von Lösungsmitteln, von Farb- und Lackkoagulaten und -schlämmen**
Recycling of solvents and coagulates and sludges of colouring agents and lacquers
Recyclage de solvants, de coagulats et de boues de colorants et de laques

(30) Priorität: 12.09.1990 DE 4028905
(43) Veröffentlichungstag der Anmeldung: 22.04.1992
(73) Patentinhaber: Chemische Werke Kluthe GmbH, 69115 Heidelberg (DE)
(72) Erfinder: Kluthe, Hans, W-6900 Heidelberg (DE); Kluthe, Martin, W-6903 Neckargemünd (DE); Fleischmann, Dieter, W-6908 Wiesloch (DE)
(74) Vertreter: Grussdorf, Jürgen, Dr.

(56) Entgegenhaltungen:
- EP-A- 0 348 554
- EP-A- 0 348 555
- BE-A- 885 003
- FR-A- 2 044 887
- GB-A- 1 577 378
- US-A- 4 071 449
- US-A- 4 814 092

## Beschreibung

Die Erfindung betrifft ein Verfahren zur Rückgewinnung von Farb- und Lackinhaltsstoffen aus mit diesen Stoffen befrachteten Lösungsmitteln und Koagulaten sowie Rückständen schlammartiger Konsistenz und von Lacken und Farben bei vollkommener Auftrennung in die einzelnen reinen Produkte.

Bekannte physikalische Verfahren zur Rückgewinnung basieren auf rein mechanischer Aufbereitung und/oder destillativer Abtrennung der Lösungsmittel von den Feststoffen. Dabei tritt durch thermische Belastung während der Destillation eine starke Wertminderung der Inhaltsstoffe ein und der Destillationsrückstand muß verworfen werden.

Ein Nachteil bisher vorgestellter Methoden zur chemischen oder chemisch-physikalischen Aufarbeitung vorgenannter Gemische besteht in der Beeinträchtigung von Pigment- und Bindemitteleigenschaften durch die längere Einwirkung eines Überschusses konzentrierter Mineralsäuren im Trennungsgang. Aufgrund der Gefahr einer Säurekorrosion in Verbindung mit einer hohen Reaktionswärme während der chemischen Behandlung sind aufwendige Apparaturen aus Edelstahl mit Kühleinrichtung erforderlich.

Aus der Deutschen Patentanmeldung P 38 21 761 ist weiterhin ein Verfahren zum Rückgewinnen von Pigmenten, Bindemitteln und Lösemitteln aus mit Lack verschmutzten Spülverdünnern bekannt, bei welchem man die Verdünner zunächst mit einer konzentrierten Säure versetzt und danach unter Rühren Lauge zufügt. Danach wird die Flüssigkeit einer Schwerkraftabscheidung unterworfen.

Nachteilig bei diesem Verfahren ist ein nicht zu vermeidender chemischer Angriff auf das Bindemittel und eine unvollständige Fest-Flüssigseparation, so daß eine nochmalige Behandlung mit Säure und Lauge erforderlich ist ebenso wie eine vorausgehende zusätzliche Abscheidung in einem Zentrifugalseparator.

Vorliegender Erfindung liegt demgegenüber die Aufgabe zugrunde, ein Verfahren zu schaffen, mit dem die belasteten Produkte aufgearbeitet und die getrennten Inhaltsstoffe ohne weitere Aufarbeitung einer Wiederverwertung zugeführt werden können. Dabei wird auf eine schonende und rückstandsfreie Recycling-Technologie orientiert, die vorgenannte Nachteile des Standes der Technik beseitigt und zu Endprodukten hoher Reinheit führt.

Die Aufgabe wird nach dem Hauptanspruch dadurch gelöst, daß die zu behandelnden Produkte einer Abfolge physikalischer und chemischer Behandlungen unterworfen werden, und ausschließlich durch die nachfolgend näher beschriebene Vorgehensweise eine rückstandsfreie Aufarbeitung zur uneingeschränkten Wiederverwertung der Pigmente, Füllstoffe, Bindemittel und Lösungsmittel erreicht wird.

Zu Beginn der Behandlung wird das Ausgangsmaterial gegebenenfalls durch Abverdünnen mit Lösungsmittel auf einen Feststoffgehalt (Bindemittel, Pigmente, Füll- und Hilfsstoffe) von 10 - 20 Gew.-%, vorzugsweise 15 %, eingestellt. Danach erfolgt durch eine Schwerkraftsedimentation die Abtrennung grober Festkörperteilchen mit einem Teilchendurchmesser > 5 »m. Die abdekantierte Suspension mit den feinstverteilten gelösten Teilchen und Schwebeteilchen wird der chemischen Behandlung zugeführt, die darin besteht, daß zuerst mit Lauge die restlichen Festkörperteilchen als großflockige Hydoxide ausgefällt werden, wobei ein pH-Wert von 8,0 nicht überschritten wird, und dieser pH-Wert nach weniger als 30, vorzugsweise 10 Minuten mit konzentrierter Mineralsäure auf pH-Werte von 5,5 bis 7,5 eingestellt wird.

Es hat sich nämlich herausgestellt, daß der Laugenangriff insbesondere auf die Bindemittel zeitabhängig ist und unterhalb von 30 Minuten nach Laugezugabe bei Raumtemperatur im wesentlichen unterbleibt, die Pigmente und Füllstoffe innerhalb dieser Zeitdauer aber vollständig ausgefällt werden. Vorzugsweise erfolgt die Zugabe der Lauge kontinuierlich. Durch die Zugabe der Phosphorsäure werden die vorhandenen suspendierten Feststoffteilchen niedergeschlagen. Die erforderliche Phosphorsäuremenge ist dabei so gering, daß sie die Qualität der Endprodukte bei der Wiederverwendung nicht beeinträchtigt.

Die Niederschlagsbildung durch die Phosphorsäure kann durch Zugabe von Flokkulationsmitteln unterstützt werden, wobei Menge und Art ebenfalls so auszuwählen sind, daß die Endprodukte der direkten Wiederverwendung zuführbar bleiben. Die Flokkulationsmittel können anfänglich oder vorzugsweise zusammen mit der Phosphorsäure zugegeben werden. Vorzugsweise werden Aluminiumsulfat, Eisen (III)-chlorid und Polyelektrolyte zugesetzt.

Durch diese chemische Behandlungsweise wird überraschenderweise erreicht, daß eine quantitative Abtrennung aller Schwebeteilchen aus der flüssigen Phase, bestehend aus Lösungsmittel und Bindemittel, erfolgt , ohne daß die Bindemittel durch die Lauge- und Säurezugabe in ihren Eigenschaften beeinträchtigt werden. Die abdekantierte Flüssigkeit ist direkt oder nach Zwischenlagerung ohne weitere Zwischenschritte, wie z.B. Zentrifugieren, der Destillation zuführbar, wobei im Vakuum bei Temperaturen zwischen 80 und 140°C das Lösungsmittel schonend vom Bindemittel abgetrennt wird.

Die anfallenden Pigment-Füllstoff-Gemische sind direkt oder nach Trocknen und Aufmahlen für die Fertigung neuer Produkte einsetzbar, wodurch ein rückstandsfreier Recycling-Prozeß erreicht wird.

### Ausführungsbeispiel

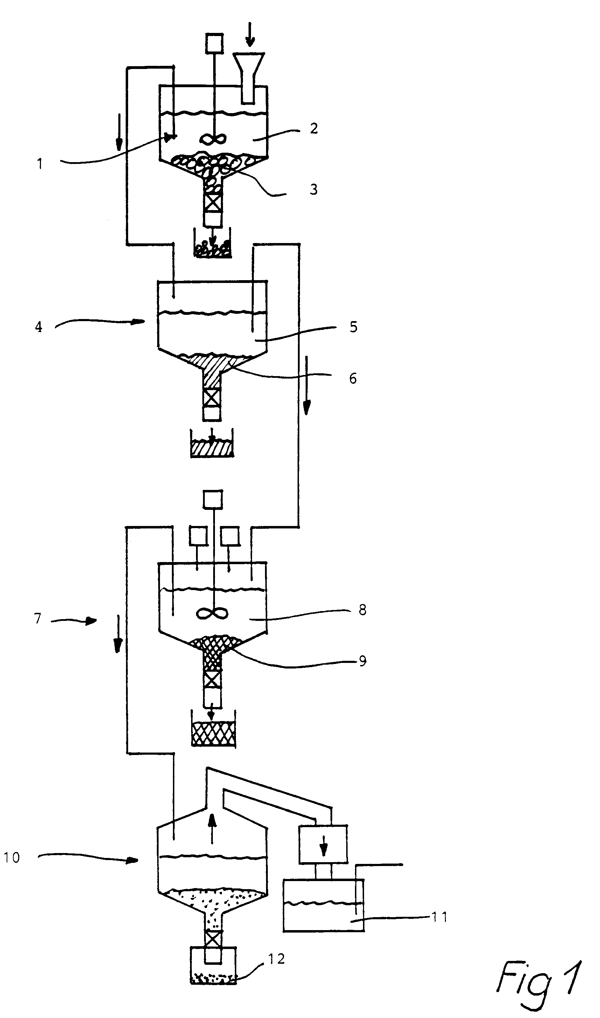

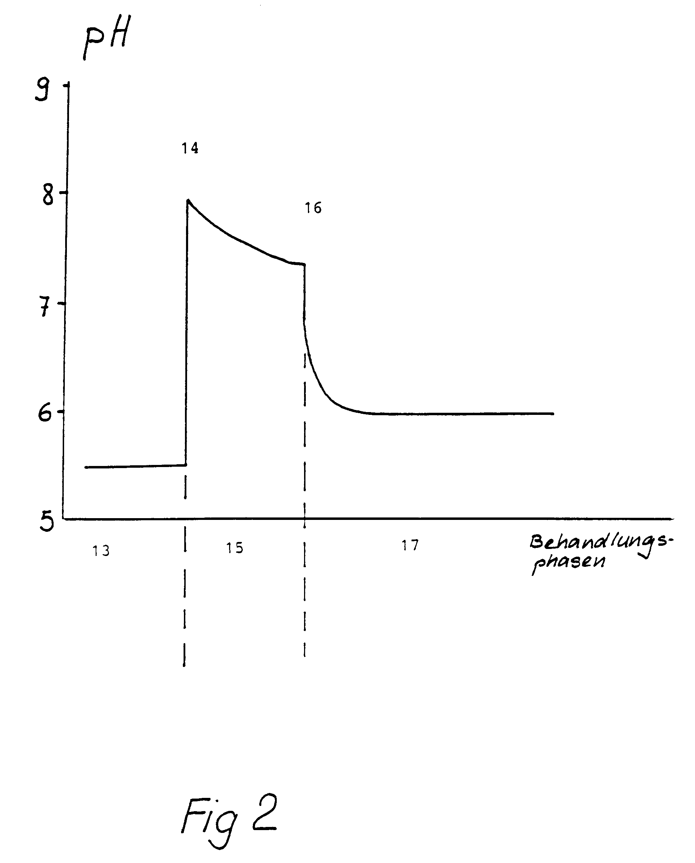

Ein mit Lackresten belasteter Spülverdünner der Zusammensetzung
3 Gew.-% Pigmente und Füllstoffe (Titandioxid, Talkum)
8 Gew.-% Bindemittel (Alkydharz, Melaminharz) und
89 Gew.-% Lösungsmittel (Xylen, Butylacetat)
wird einer 24-stündigen Sedimentation zur Abtrennung grober Festkörper unterzogen (Fig. 1). Die überstehende Suspension wird dekantiert und der chemischen Behandlung zugeführt. Dabei wird der pH-Wert der Ausgangsware von 5,5 (FIG 2) mit Natronlauge auf einen pH-Wert von 8,0 angehoben, wodurch die restlichen Pigmente und Füllstoffe quantitativ ausgefällt werden. Nach einer Einwirkzeit von 10 Minuten erfolgt durch Zugabe von 0,2 Vol.% Phosphorsäure die Einstellung eines pH-Wertes von 6,0. Während der gesamten Behandlungszeit wird das Produkt intensiv gerührt. Nachdem sich der Niederschlag nach 5 Stunden vollständig abgesetzt hat, wird die klare Lösung abdekantiert und bei 10⁻¹ bar und 90°C abdestilliert. Das als Destillat anfallende Lösungsmittel sowie die Bindemittelphase werden zusammen mit den bei 150°C getrockneten, aufgemahlenen und klassierten Pigment-Füllstoff-Gemisch zu einer neuen Lack- bzw. Farbkombination vereinigt. Überschüssiges Lösungsmittel steht für die Aufarbeitung von Koagulaten oder Lackschlämmen, sowie als Reinigungsverdünner zur Verfügung.

### Bezugszeichenliste

### Fig. 1 Aufarbeitungsanlage

- 1: Extraktionsanlage
- 2: Lösungsmittel
- 3: Koagulat
- 4: Sedimentationsanlage
- 5: Suspension (Lösungsmittel + Bindemittel + dispergierte Festkörper)
- 6: Sediment (Pigment + Füllstoff)
- 7: chemische Behandlung
- 8: klare Lösung (Lösungsmittel + Bindemittel)
- 9: Niederschlag (Pigment + Füllstoff)
- 10: Destillation
- 11: Destillat (Lösungsmittel)
- 12: Bindemittel

### Fig. 2 pH-Wert-Gang während der chemischen Behandlung

- 13: pH-Kurve der Originalware ohne Zusätze
- 14: NaOH-Zugabe
- 15: pH-Kurve der Fällungsreaktion
- 16: H₃PO₄-Zugabe
- 17: pH-Kurve der Neutralisation und Stabilisierung

## Patentansprüche

1. Verfahren zum Aufarbeiten von Farben und Lacken oder von mit Farb- und Lackanteilen versetzten organischen und anorganischen Lösemitteln oder Lösemittelgemischen durch Sinkscheiden und Behandlung mit Säure und Laugen, **dadurch gekennzeichnet**, daß man zunächst die aufzuarbeitende Flüssigkeit auf Feststoffgehalte von 10 bis 20 Gew.-% einstellt, grobteilige Partikel absitzen läßt und dekantiert, danach das Dekantat mit Lauge auf einen pH-Wert von 8 innerhalb eines Zeitraumes ≦ 30 Minuten einstellt, anschließend durch Zugabe von Phosphorsäure den pH-Wert auf 5,5 bis 7,5 bringt, anschließend den dadurch gebildeten Niederschlag in an sich bekannter Weise abtrennt und die Lösung durch Destillation unter Erhalt des Bindemittels aufarbeitet.

2. Verfahren nach Anspruch 1, **dadurch gekennzeichnet,** daß als Lauge Natronlauge verwendet wird.

3. Verfahren nach den Ansprüchen 1 oder 2, **gekennzeichnet** durch eine Einwirkzeit der Lauge auf das Dekantat von 10 Minuten.

4. Verfahren nach mindestens einem der Ansprüche 1 bis 3, **dadurch gekennzeichnet,** daß die Laugezugabe kontinuierlich erfolgt.

5. Verfahren nach mindestens einem der Ansprüche 1 bis 4, dadurch gekennzeichnet, daß Phosphorsäure bis zum Erreichen eines pH-Wertes von 6,0 zugegeben wird.

6. Verfahren nach mindestens einem der Ansprüche 1 bis 5, **dadurch gekennzeichnet,** daß der anfängliche Feststoffgehalt auf 15 Gew.-% eingestellt wird.

7. Verfahren nach mindestens einem der Ansprüche 1 bis 6, **dadurch gekennzeichnet,** daß man Flokkulationsmittel anfänglich oder zusammen mit der Phosphorsäure zufügt.

8. Verfahren nach Anspruch 7, **dadurch gekennzeichnet,** daß als Flokkulationsmittel Aluminiumsulfat, Eisen(III)-chlorid und/oder Polyelektrolyte zugefügtwird.

## Claims

1. Process for the working up of coloured materials and lacquers or of organic and inorganic solvents mixed with colour and lacquer components or of solvent mixtures by gravimetric flotation and treatment with acid and lyes, characterised in that one first adjusts the liquid to be worked up to a solids content of 10 to 20 wt.%, allows coarse particles to deposit and decants, thereafter adjusts the decantate with lye to a pH value of 8 within a period of time of ≦ 30 minutes, subsequently, by addition of phosphoric acid, brings the pH value to 5.5 to 7.5, subsequently separates off in known manner the precipitate thereby formed and works up the solution by distillation with obtaining of the binding agent.

2. Process according to claim 1, characterised in that caustic soda solution is used as lye.

3. Process according to claim 1 or 2, characterised by a period of action of the lye on the decantate of 10 minutes.

4. Process according to at least one of claims 1 to 3, characterised in that the lye addition takes place continuously.

5. Process according to at least one of claims 1 to 4, characterised in that phosphoric acid is added up to the achievement of a pH value of 6.0.

6. Process according to at least one of claims 1 to 5, characterised in that the initial solids content is adjusted to 15 wt.%.

7. Process according to at least one of claims 1 to 6, characterised in that one adds flocculation agent initially or together with the phosphoric acid.

8. Process according to claim 7, characterised in that aluminium sulphate, iron (III) chloride and/or polyelectrolytes is added as flocculation agent.

## Revendications

1. Procédé de recyclage de colorants et de laques ou de solvants organiques ou inorganiques, contenant des ingrédients de colorants et de laques, ou de mélanges de solvants par séparation par gravité et par traitement à l'acide et à la base, **caractérisé en ce qu'**on ajuste d'abord la teneur en matière solide du liquide à recycler à une valeur entre 10 et 20 % en poids, en ce qu'on laisse sédimenter les particules grosses et les décante, en ce qu'après on ajuste à 8 en un intervalle de temps ≦ 30 minutes la valeur pH du liquide décanté à l'aide de base, en ce qu'ensuite on amène la valeur pH à une valeur entre 5.5 et 7.5 en ajoutant de l'acide phosphorique, en ce qu'ensuite on sépare la précipitation ainsi formée de manière connue en soi et on recycle la solution par distillation en conservant le liant.

2. Procédé selon la revendication 1, caractérisé en ce que en tant que base on utilise de la soude caustique.

3. Procédé selon les revendications 1 ou 2, caractérisé par un intervalle de temps d'action de 10 minutes de la base sur le liquide décanté.

4. Procédé selon au moins une des revendications 1 à 3, caractérisé en ce que l'addition de la base se fait en continu.

5. Procédé selon au moins une des revendications 1 à 4, caractérisé en ce qu'on ajoute de l'acide phosphorique jusqu'à ce qu'une valeur pH de 6.0 soit atteinte.

6. Procédé selon au moins une des revendications 1 à 5, caractérisé en ce que la teneur en matière solide initiale est ajustée à une valeur de 15 % en poids.

7. Procédé selon au moins une des revendications 1 à 6, caractérisé en ce qu'on ajoute des floculants au début ou en même temps que l'acide phosphorique.

8. Procédé selon la revendication 7, caractérisé en ce que, en tant que floculant, on ajoute du sulfate d'aluminium, du chlorure ferrique et/ou des polyelectrolytes.
